# EUROPÄISCHE PATENTSCHRIFT

(11) **EP 3 094 879 B1**
(45) Veröffentlichungstag und Bekanntmachung des Hinweises auf die Patenterteilung: **11.10.2017**
(21) Anmeldenummer: 14833122.6
(22) Anmeldetag: 08.12.2014
(51) Int. Cl.: F16D 13/58, F16D 13/75

(54) **SELBSTNACHSTELLENDE KUPPLUNG MIT VERSTELLANZEIGE /-RÜCKKOPPLUNG**
SELF-ADJUSTING CLUTCH WITH ADJUSTING DISPLAY/FEEDBACK
EMBRAYAGE À RATTRAPAGE D'USURE AUTOMATIQUE AVEC INDICATION/RÉTROACTION DE POSITIONNEMENT

(30) Priorität: 15.01.2014 DE 102014200553
(43) Veröffentlichungstag der Anmeldung: 23.11.2016
(73) Patentinhaber: Schaeffler Technologies AG & Co. KG, 91074 Herzogenaurach (DE)
(72) Erfinder: KAPPELMANN, Ralf, 77871 Renchen (DE)
(86) Internationale Anmeldenummer: PCT/DE2014/200683
(87) Internationale Veröffentlichungsnummer: WO 2015/106749

(56) Entgegenhaltungen:
- WO-A1-03/029675
- DE-A1-102011 086 009

## Beschreibung

Die Erfindung betrifft eine selbstnachstellende Kupplung (SAC) für ein Kraftfahrzeug, mit einer axial von einem Betätigungsorgan, wie einer Tellerfeder, verlagerbaren Anpressplatte, um eine Kupplungsscheibe zwischen der Anpressplatte und einem Gegendrückorgan, wie einer

Gegendruckplatte oder einem Schwungrad, drehmomentübertragend einzuklemmen, und mit einem Verstellring, der sich so an einem Deckel abstützt, dass er beim Ausführen einer Relativdrehung zum Deckel, zum Neuausrichten des Betätigungsorgans näher an die Anpressplatte heran rückt.

Aus dem Stand der Technik sind bereits Pkw-Serienkupplungen bekannt, die sich selbst nachstellen. Solche selbstnachstellenden Kupplungen (SAC), die im Englischen als "Self-Adjusting Clutches" bekannt sind, sind kraftgesteuert oder weggesteuert. Pkw-SAC-Serienkupplungen gleichen den Verschleiß bis zum Erreichen von Stufenbolzenanschlägen aus und fallen dabei durch einen Anpresskraftabbau im Deckel durch Kupplungsrutschen aus. Dabei verbrennen die Beläge. Ferner wird die Kupplungsdruckplatte irreversibel beschädigt. Hier sei auf Federsetzverluste und Gussverschleiß hingewiesen. Desweiteren tritt das Kupplungsrutschen ohne Vorwarnung beim Bediener auf.

Reibungskupplungen als solche sind bspw. aus der DE 10 2009 024 213 A1, WO 03/029675 A1, DE 10 2011 086 009 A1 bekannt. So offenbart die DE 10 2009 024 213 A1 eine Reibungskupplung mit einer motorseitig aufgenommenen Anpressplatte und einer zu dieser axial verlagerbaren Druckplatte zur Bildung eines Reibschlusses zu Reibbelägen einer Kupplungsscheibe. Die Reibungskupplung wird dabei mittels eines Hebelsystems betätigt, dass die im nicht betätigten Zustand von einem Energiespeicher gegen die Anpressplatte verspannte Druckplatte entgegen der Wirkung des Energiespeichers öffnet. Als Besonderheit ist in jener Druckschrift vorgeschlagen, auf ein Kupplungsgehäuse, das ein Wiederlager für das Hebelsystem und den Energiespeicher bildet, zu verzichten und das Hebelsystem direkt auf der Anpressplatte aufzunehmen und den Energiespeicher dazwischen zu verspannen.

Das Problem des mangelnden Rückmeldens von zu erwartendem Kupplungsrutschen wird in dieser Druckschrift jedoch nicht gelöst. Bei der vorliegenden Erfindung ist es aber gerade die Aufgabe, die Nachteile aus dem Stand der Technik zu vermeiden und eine Bedienerwarnung vorzuhalten sowie das Vermeiden verbrannter Kupplungsdruckplatten beim Erreichen des zulässigen Kupplungsverschleißbereiches zu ermöglichen.

Diese Aufgabe wird bei einer gattungsgemäßen Kupplung erfindungsgemäß dadurch gelöst, dass ein solcher Anschlag zwischen dem Verstellring und dem Deckel vorgehalten ist, der etwa unter Hervorrufens eines geometrischen Kupplungsfehlers, eine Schiefstellung der Anpressplatte relativ zu einer orthogonal zur Rotationsachse ausgerichteten Transversalebene, d.h. der Ebene, in der z.B. im Betrieb die Kupplungsscheibe rotiert, beim Bewegen der Anpressplatte auf die Kupplungsscheibe hervorruft.

Bei einer solchen Ausgestaltung ist als Effekt festzustellen, dass die Kupplung beim Anfahren und Schalten zu "rupfen" beginnt, d.h. deren Frequenz angeregt wird, was dann dem Fahrer des Kraftfahrzeuges, also dem Bediener, rückgekoppelt wird. Dadurch, und dass die Kraft zum Betätigen der Kupplung am Ende des Verschleißweges, d.h. also beim Erreichen des Endes des zulässigen Kupplungsverschleißbereiches, (d.h. die Betätigungskraft) höher werden muss, wird eine verlässliche Rückkopplung ermöglicht. Unter Zwischenschaltung von Kupplungsausrückern und / oder Pedalen, stellt der Bediener nämlich beim Fußbetätigen des Pedals bspw. einen erhöhten Kraftbedarf fest. Auch sind Sensoriken vorhaltbar, um den Kraftbedarf des etwa als Tellerfeder ausgebildeten Betätigungsorgans zum Betätigen der Kupplung festzustellen. Die Kupplung kann dabei als "normally open" oder besser als "normally closed" Kupplung ausgestaltet sein.

Dieses Prinzip ist sowohl für kraftgesteuerte (load adjusting clutches / LAC) als auch weggesteuerte Kupplungen (SAC 1 bis 4) und "travel adjusted clutches", etwa mit zwei Verstellringen (TAC-2VR) anwendbar.

Vorteilhafte Ausführungsformen sind in den Unteransprüchen beansprucht und werden nachfolgend näher erläutert.

So ist es von Vorteil, wenn ein einzelner Anschlag vorhanden ist oder mehrere zur Rotationsachse der Kupplung unsymmetrische, insbesondere rotationssymmetrische, Anschläge vorhanden / vorgesehen sind. Auf diese Weise ist sichergestellt, dass der Verstellring einseitig mit dem Deckel in Anschlag gelangt und sich beim Betätigen der Kupplung schief stellt, was zum Schiefstellen des Betätigungsorgans / der Tellerfeder führt, was wiederum zu einer ungleichmäßigen Krafteinleitung in die Anpressplatte führt, so dass die Anpressplatte ungleichmäßig auf einen an der Kupplungsscheibe angebrachten Reibbelag drückt. Zusammen mit den sowieso in der Kupplung enthaltenen Fehlern, wie Materialfehlern, also insbesondere geometrischen Fehlern, erzeugt der nun künstlich geschaffene geometrische Fehler eine Frequenzanregung, die zu einem sog. "Rupfen" oder "Vibrieren" führt.

Die Konfektionierbarkeit der Kupplung auf unterschiedliche Anwendungsbereiche und insbesondere unterschiedlich lange Stufenbolzen, kann erreicht werden, wenn der Anschlag als separates Anschlagteil am Deckel oder am Verstellring befestigt ist. Abweichend und alternativ dazu kann der Anschlag ein integraler Bestandteil des Deckels und / oder des Verstellrings sein. Die Zahl der Einzelteile wird dann reduziert, was die Kosten geringer werden lassen könnte. Der Anschlag kann auch aufgeteilt sein als ein integraler Bestandteil des Deckels und des Verstellrings, so dass sich diese Teilanschläge beim Zusammentreffen als Gesamtanschlag ergänzen.

Es ist auch möglich, dass der Verstellring einen, sich in Axialrichtung durch eine Ausnehmung des Deckels hindurch erstreckenden Vorsprung, etwa in Form eines Verstellringschwertes, aufweist, der bei Verschleiß eines zwischen der Kupplungsscheibe und der Anpressplatte vorhandenen Reibbelages zum in Anlage gelangen mit dem Anschlag vorbereitet ist. Dadurch kann der axiale Bauraum besser genutzt werden.

Es ist auch zweckmäßig, wenn der in Umfangsrichtung gemessene Abstand zwischen dem Verstellring und dem Anschlag so an die Länge eines die Anpressplatte mit dem Deckel verbindenden Bolzens, wie des besagten Stufenbolzens, angepasst ist, dass vor Erreichen des Verschleißendes / Lebensdauerendes / Kupplungsverschleißbereiches eines zwischen der Anpressplatte und der Kupplungsscheibe vorhandenen Reibbelags der Verstellring in Anlage mit dem Anschlag gelangt / kommt.

Um den Einsatzbereich der Kupplung zu erhöhen, ist es von Vorteil, wenn die Kupplung als Einfachkupplung oder als Doppelkupplung ausgestaltete Kupplung eine kraft- oder weggesteuerte Nachstelleinrichtung beinhaltet.

Damit die Vormontage erleichtert wird, ist es von Vorteil, wenn am in Axialrichtung abstehenden Vorsprung des Verstellringes eine Nachstellfeder angreift, wie eine Druckfeder, etwa eine in Umfangsrichtung wirkende Schraubendruckfeder.

Dabei ist es von Vorteil, wenn die Nachstellfeder auf der kupplungsscheibenfernen Seite des Deckels an diesem festgelegt ist. Die Zugänglichkeit der Nachstellfeder bzw. mehrerer Nachstellfedern, die gleichverteilt über den Umfang am Verstellring angreifen, wird dadurch erleichtert.

Die Funktion der Kupplung wird verbessert, wenn eine Sensortellerfeder auf der deckelfernen Seite des Betätigungsorgans auf dieses einwirkt.

Ferner ist es zweckmäßig, wenn nur eine Teilmenge aller Vorsprünge des Verstellrings je mit einem Anschlag in Drehbewegung beendenden zum in Kontakt gelangen vorgesehen / vorbereitet ist.

Mit anderen Worten wird ein Anschlag am Verstellringschwert vorgeschlagen, das die Nachstellfeder trägt, mit der der Verstellring / der Rampenring, der etwa in Umfangsrichtung vorgespannt ist, um dem Fahrer das Erreichen des Verschleißbereich-Endes aufzuzeigen. Dadurch wird eine Beschädigung der Anpressplatte und der Gegendruckplatte durch Kontakt mit dem Reibbelag bzw. der Kupplungsscheibe vermieden.

Mindestens eines der Verstellringschwerter soll mit einem solchen Anschlag ausgestattet sein bzw. mit einem solchen Anschlag in Kontakt gelangen. Es sollen aber nicht alle Verstellringschwerter an einen Anschlag gelangen. Dadurch, dass nur eine Teilmenge aller Verstellringschwerter der SAC mit einem solchen Anschlag ausgestattet ist bzw. in Kontakt mit einem solchen gelangt, entsteht beim Erreichen des Verschleißbereichendes ein künstlicher geometrischer Fehler der Kupplung, wodurch vom weiteren Verdrehen des Rampenrings die mit der Tellerfeder in Anlage gelangende / befindliche Oberfläche des Rampenrings nicht mehr koplanar zu einer Bezugsfläche des Kupplungsdeckels, z.B. zum Deckelrand, ist, sondern bzgl. dieser Bezugsfläche verkippt ist. Wie bereits erläutert, ist dann die Oberfläche des Rampenrings schräg zu besagter Transversalebene ausgerichtet. Die Verkippung ist dabei gewünscht. Hierdurch entsteht ein Kupplungsrupfen, das der Fahrer durch erhöhte Vibration beim Einkuppeln wahrnimmt, wodurch er auf das Ende des Verschleißbereiches hingewiesen wird.

Es ist also von Vorteil, wenn einer oder mehrere zusätzliche Anschläge zwischen dem Verstellringschwert und dem Deckel nach Aufbrauch des Verschleißbereiches den Verstellring einseitig oder mehrseitig blockieren. Dieser Anschlag bzw. diese Anschläge sind abgestimmt und wird / werden bei der Montage integriert. Als Folge daraus entsteht ein geometrischer Fehler bei der Kupplungsbedienung und der Bediener wird durch ein Auftreten erhöhter Vibration beim Einkuppeln / "Rupfen" auf ein erreichtes Verschleißende hingewiesen. Weiterhin wird die Anpresskraft und die Ausrückkraft ansteigen, wodurch ein Kupplungsrutschen / thermische Überbelastung / Überlast / Überlastung vermieden wird und der Kraftanstieg am Pedal deutlich spürbar ist, was auf ein erreichtes Verschleißende hinweist.

Die Erfindung wird nachfolgend auch mit Hilfe einer Zeichnung näher erläutert, in der ein erstes Ausführungsbeispiel näher dargestellt ist. Es zeigen:
- Fig. 1: eine Ansicht in Axialrichtung auf einen Deckel einer erfindungsgemäßen Kupplung mit einer Tellerfeder, die über einen Verstellring nachstellbar ist, und
- Fig. 2: einen Längsschnitt durch die Kupplung aus Fig. 1.

Die Figuren sind lediglich schematischer Natur und dienen nur dem Verständnis der Erfindung. Die gleichen Elemente sind mit denselben Bezugszeichen versehen.

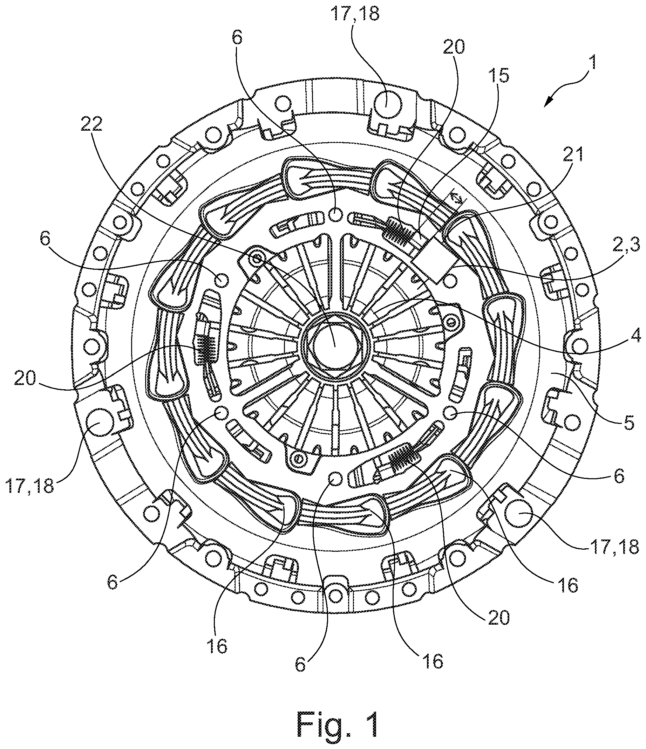

In Fig. 1 ist eine erste Ausführungsform einer erfindungsgemäßen selbstnachstellenden Kupplung 1 dargestellt. Die Kupplung 1 ist zum Einsatz in einem Kraftfahrzeug, wie einem Pkw, einem Lkw oder einem anderen Nutzfahrzeug (Nfz) vorbereitet. Ein Betätigungsorgan 2 ist als Tellerfeder 3 ausgebildet und weist Zungen 4 auf, die von einem Auslöseorgan, wie einem Ausrücklager, aktivierbar sind.

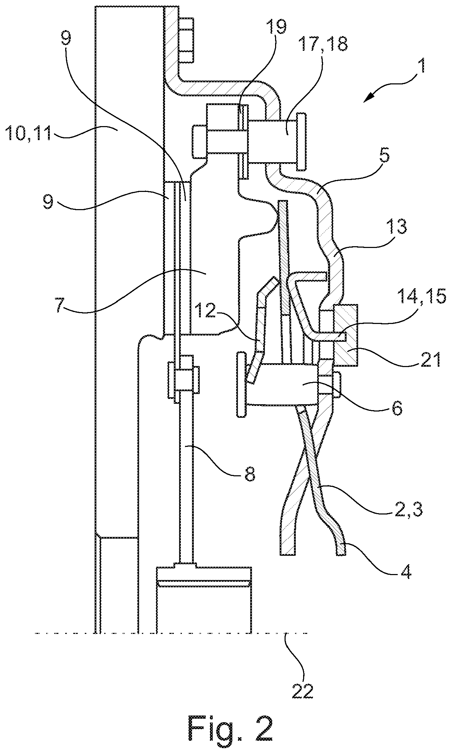

Unter Vorgriff auf Fig. 2 ist auch das Befestigen der Tellerfeder 3 an einem Deckel 5 mit mehreren, hier sechs Befestigungsbolzen 6 hingewiesen. Das vom Befestigungsbolzen 6 gesehen zungenferne äußere Ende der Tellerfeder 3, etwa der äußere Rand, drückt auf eine Anpressplatte 7, die in Richtung einer Kupplungsscheibe 8 axial verlagerbar ist. An der Kupplungsscheibe 8 sind zwei Reibbeläge 9 angebracht, die auch eine Eigenfederwirkung nach Art einer "Belagfederung" haben.

Der anpressplattenferne Reibbelag 9 kann in Anlage mit einem Gegendrückorgan 10, hier also einem Schwungrad 11 gelangen. Zwischen der Anpressplatte 7 und der Tellerfeder 3 ist auch eine Sensorfeder 12, etwa nach Art einer Sensor-Tellerfeder angeordnet. Sie greift sowohl an der Tellerfeder 3 als auch dem Befestigungsbolzen 6 an.

Ein Verstellring 13, der auch als Rampenring bezeichnet werden kann, ist zwischen dem Deckel 5 und dem Betätigungsorgan 2 / der Tellerfeder 3 angeordnet. Sie weist einen Vorsprung 14 auf, der auch als Verstellringschwert bezeichnet werden kann und das Bezugszeichen 15 trägt. Zwischen dem Verstellring 13 und dem Deckel 5 wirken Rampen 16, wie sie in Fig. 1 angedeutet sind. Die Rampen 16 können entweder am Deckel 5 oder dem Verstellring 13 vorhanden sein oder an beiden Elementen. Der Deckel 5 legt unter Nutzung eines Bolzens 17, der auch als Stufenbolzen 18 bezeichnet werden kann, die Anpressplatte 7 drehfest im Fahrzeug fest. Der Stufenbolzen 18 legt die Anpressplatte 7 somit drehfest am Deckel 5 fest. Dabei ist eine Axialverlagerung der Anpressplatte relativ zum Bolzen 17 aber möglich. Zwischen einem größeren Durchmesserbereich des Stufenbolzens 18 und der Anpressplatte 7 ist auch eine oder mehrere Blattfedern vorgehalten. In Fig. 1 sind auch die einzelnen Nachstellfedern 20 zu erkennen, wie sie zwischen dem Verstellringschwert 15 und dem Deckel 5 angeordnet sind. An einer einzigen Stelle ist ein Anschlag 21 vorgesehen. Der Anschlag 21 ist am Deckel 5 festgelegt. Zwischen dem Anschlag 21 und dem Verstellringschwert 15 ist ein zusätzlicher Verschleißbereich mit dem Zeichen x referenziert.

Die Rotationsachse ist mit dem Bezugszeichen 22 versehen und in Fig. 2 zu erkennen.

Gerät der Verstellring über sein Verstellringschwert 15 in Anlage mit dem Anschlag 21, so wird ein geometrischer Fehler erzwungen, der zu einer Schiefstellung des Verstellringes 13 und damit auch durch das Zusammenwirken der Einzelkomponenten zu einer Schiefstellung der Anpressplatte 7 und der Tellerfeder 3 führt, was zu einem ungleichmäßigen Belasten des Reibbelages 9 beim Anfahren und Schalten führt. Ein "Vibrieren" und "Rupfen" ist die Folge.

Auch steigt die Kraft, die zum Aufbringen auf die Zunge 4 zur Betätigung der Anpressplatte 7 notwendig ist, am Ende des vorgehaltenen Verschleißweges wahrnehmbar/stark an.

### Bezugszeichenliste

- 1: Kupplung
- 2: Betätigungsorgan
- 3: Tellerfeder
- 4: Zunge
- 5: Deckel
- 6: Befestigungsbolzen
- 7: Anpressplatte
- 8: Kupplungsscheibe
- 9: Reibbelag
- 10: Gegendrückorgan
- 11: Schwungrad
- 12: Sensorfeder
- 13: Verstellring
- 14: Vorsprung
- 15: Verstellringschwert
- 16: Rampe
- 17: Bolzen
- 18: Stufenbolzen
- 19: Blattfeder
- 20: Nachstellfeder
- 21: Anschlag
- 22: Rotationsachse

## Patentansprüche

1. Selbstnachstellende Kupplung (1) für ein Kraftfahrzeug, mit einer axial von einem Betätigungsorgan (2) verlagerbaren Anpressplatte (7), um eine Kupplungsscheibe (8) zwischen der Anpressplatte (7) und einem Gegendrückorgan (10) drehmomentübertragend einzuklemmen, und mit einem Verstellring (13), der sich so an einem Deckel (5) abstützt, dass er beim Ausführen einer Relativdrehung zum Deckel (5), zum Neuausrichten des Betätigungsorgans (2) näher an die Anpressplatte (7) heranrückt, **dadurch gekennzeichnet, dass** ein solcher Anschlag (21) zwischen dem Verstellring (13) und dem Deckel (5) vorgehalten ist, der eine Schiefstellung der Anpressplatte (7) relativ zu einer orthogonal zur Rotationsachse ausgerichteten Transversalebene beim Bewegen der Anpressplatte (7) auf die Kupplungsscheibe (8) hervorruft.

2. Kupplung (1) nach Anspruch 1, **dadurch gekennzeichnet, dass** ein einzelner Anschlag (21) vorhanden ist oder mehrere zur Rotationsachse unsymmetrische Anschläge (21) vorhanden sind.

3. Kupplung (1) nach Anspruch 1 oder 2, **dadurch gekennzeichnet, dass** der Anschlag (21) als separates Anschlagteil am Deckel (5) oder dem Verstellring (13) befestigt ist, oder der Anschlag (21) ein integraler Bestandteil des Deckels (5) oder des Verstellrings (13) ist.

4. Kupplung (1) nach einem der Ansprüche 1 bis 3, **dadurch gekennzeichnet, dass** der Verstellring (13) einen, sich in Axialrichtung durch eine Ausnehmung des Deckels (5) hindurch erstreckenden Vorsprung (14) aufweist, der bei Verschleiß eines zwischen der Kupplungsscheibe (8) und der Anpressplatte (7) vorhandenen Reibbelages (9) zum in Anlage gelangen mit dem Anschlag (21) vorbereitet ist.

5. Kupplung (1) nach einem der Ansprüche 1 bis 4, **dadurch gekennzeichnet, dass** der in Umfangsrichtung gemessene Abstand (x) zwischen dem Verstellring (13) und dem Anschlag (21) so an die Länge eines die Anpressplatte (7) mit dem Deckel (5) verbindenden Bolzens (17) angepasst ist, dass vor Erreichen des Verschleißendes eines zwischen der Anpressplatte (7) und der Kupplungsscheibe (8) vorhandenen Reibbelages (9) der Verstellring (13) in Anlage mit dem Anschlag (21) gelangt.

6. Kupplung (1) nach einem der Ansprüche 1 bis 5, **dadurch gekennzeichnet, dass** die als Einfach- oder Doppelkupplung ausgestaltete Kupplung (1) eine kraft- oder weggesteuerte Nachstelleinrichtung beinhaltet.

7. Kupplung (1) nach einem der Ansprüche 4 bis 6, **dadurch gekennzeichnet, dass** am in Axialrichtung abstehenden Vorsprung (14) des Verstellringes (13) eine Nachstellfeder (20) angreift.

8. Kupplung (1) nach Anspruch 7, **dadurch gekennzeichnet, dass** die Nachstellfeder (20) auf der kupplungsscheibenfernen Seite des Deckels (5) an diesem festgelegt ist.

9. Kupplung (1) nach einem der Ansprüche 1 bis 8, **dadurch gekennzeichnet, dass** eine Sensortellerfeder auf der deckelfernen Seite des Betätigungsorgans (2) auf dieses einwirkt.

10. Kupplung (1) nach einem der Ansprüche 4 bis 9, **dadurch gekennzeichnet, dass** nur eine Teilmenge aller Vorsprünge des Verstellringes (13) je mit einem Anschlag (21) in drehbewegungsbeendenden zum in Kontakt gelangen vorgesehen ist.

## Claims

1. Self-adjusting clutch (1) for a motor vehicle, having a pressure plate (7) which can be moved axially by an actuating member (2), in order to clamp in a clutch plate (8) between the pressure plate (7) and a counterpressure member (10) in a torque-transmitting manner, and having an adjustment ring (13) which is supported on a cover (5) in such a way that, when carrying out a relative rotation with respect to the cover (5), it moves closer to the pressure plate (7) in order to re-orient the actuating member (2), **characterized in that** a stop (21) of the type which brings about an oblique position of the pressure plate (7) relative to a transverse plane which is oriented orthogonally with respect to the rotational axis during the movement of the pressure plate (7) onto the clutch plate (8) is provided between the adjustment ring (13) and the cover (5).

2. Clutch (1) according to Claim 1, **characterized in that** there is a single stop (21) or there is a plurality of stops (21) which are asymmetrical with respect to the rotational axis.

3. Clutch (1) according to Claim 1 or 2, **characterized in that** the stop (21) is fastened as a separate stop part to the cover (5) or the adjustment ring (13), or the stop (21) is an integral constituent part of the cover (5) or of the adjustment ring (13).

4. Clutch (1) according to one of Claims 1 to 3, **characterized in that** the adjustment ring (13) has a projection (14) which extends in the axial direction through a recess of the cover (5) and is prepared for coming into contact with the stop (21) in the case of wear of a friction lining (9) which is present between the clutch plate (8) and the pressure plate (7).

5. Clutch (1) according to one of Claims 1 to 4, **characterized in that** the spacing (x), measured in the circumferential direction, between the adjustment ring (13) and the stop (21) is adapted to the length of a bolt (17) which connects the pressure plate (7) to the cover (5), in such a way that the adjustment ring (13) comes into contact with the stop (21) before the wear end of a friction lining (9) which is present between the pressure plate (7) and the clutch plate (8) is reached.

6. Clutch (1) according to one of Claims 1 to 5, **characterized in that** the clutch (1) which is configured as a single or double clutch comprises a force-controlled or path-controlled adjustment device.

7. Clutch (1) according to one of Claims 4 to 6, **characterized in that** an adjustment spring (20) acts on the projection (14) of the adjustment ring (13), which projection (14) protrudes in the axial direction.

8. Clutch (1) according to Claim 7, **characterized in that** the adjustment spring (20) is fixed to the cover (5) on that side of the said cover (5) which is remote from the clutch plate.

9. Clutch (1) according to one of Claims 1 to 8, **characterized in that** a sensor diaphragm spring acts on the actuating member (2) on that side of the said actuating member (2) which is remote from the cover.

10. Clutch (1) according to one of Claims 4 to 9, **characterized in that** only a partial quantity of all projections of the adjustment ring (13) are provided in each case with a stop (21) for coming into contact so as to end the rotational movement.

## Revendications

1. Embrayage à rattrapage d'usure automatique (1) pour un véhicule automobile, avec un plateau de pression (7) déplaçable axialement au moyen d'un organe d'actionnement (2), afin de serrer un disque d'embrayage (8) entre le plateau de pression (7) et un organe de contrepression (10) de façon à transmettre un couple de rotation, et avec un anneau de réglage (13), qui s'appuie sur un couvercle (5), de telle manière que lors de l'exécution d'une rotation par rapport au couvercle (5), il se rapproche plus près du plateau de pression (7) afin de réaligner l'organe d'actionnement (2), **caractérisé en ce qu'**une butée (21) est retenue entre l'anneau de réglage (13) et le couvercle (5), telle qu'elle provoque une position oblique du plateau de pression (7) par rapport à un plan transversal orienté orthogonalement à l'axe de rotation lors du déplacement du plateau de pression (7) vers le disque d'embrayage (8).

2. Embrayage (1) selon la revendication 1, **caractérisé en ce qu'**il se trouve une seule butée (21) ou plusieurs butées (21) asymétriques par rapport à l'axe de rotation.

3. Embrayage (1) selon la revendication 1 ou 2, **caractérisé en ce que** la butée (21) est fixée en tant que partie de butée séparée au couvercle (5) ou à l'anneau de réglage (13), ou la butée (21) est une partie intégrante du couvercle (5) ou de l'anneau de réglage (13).

4. Embrayage (1) selon l'une quelconque des revendications 1 à 3, **caractérisé en ce que** l'anneau de réglage (13) présente une saillie (14) s'étendant en direction axiale à travers un évidement du couvercle (5), et qui en cas d'usure d'une garniture de friction (9) placée entre le disque d'embrayage (8) et le plateau de pression (7) est préparée pour venir s'appliquer sur la butée (21).

5. Embrayage (1) selon l'une quelconque des revendications 1 à 4, **caractérisé en ce que** la distance (x) mesurée en direction périphérique entre l'anneau de réglage (13) et la butée (21) est adaptée à la longueur d'un boulon (17) reliant le plateau de pression (7) au couvercle (5), de telle manière que l'anneau de réglage (13) vienne s'appliquer sur la butée (21) avant d'atteindre la fin de l'usure d'une garniture de friction (9) placée entre le plateau de pression (7) et le disque d'embrayage (8).

6. Embrayage (1) selon l'une quelconque des revendications 1 à 5, **caractérisé en ce que** l'embrayage (1) réalisé sous forme d'embrayage simple ou d'embrayage double contient un dispositif de rattrapage d'usure commandé par la force ou la course.

7. Embrayage (1) selon l'une quelconque des revendications 4 à 6, **caractérisé en ce qu'**un ressort de rattrapage d'usure (20) agit sur la saillie (14) de l'anneau de réglage (13) saillante en direction axiale.

8. Embrayage (1) selon la revendication 7, **caractérisé en ce que** le ressort de rattrapage d'usure (20) est fixé au couvercle (5) sur le côté détourné du disque d'embrayage.

9. Embrayage (1) selon l'une quelconque des revendications 1 à 8, **caractérisé en ce qu'**une rondelle élastique de capteur agit sur le côté de l'organe d'actionnement (2) détourné du couvercle.

10. Embrayage (1) selon l'une quelconque des revendications 4 à 9, **caractérisé en ce que** seule une quantité partielle de toutes les saillies de l'anneau de réglage (13) est prévue pour venir respectivement en contact de fin de mouvement de rotation avec une butée (21).
